# EUROPÄISCHE PATENTSCHRIFT

(11) **EP 0 633 635 B1**
(45) Veröffentlichungstag und Bekanntmachung des Hinweises auf die Patenterteilung: **15.10.1997**
(21) Anmeldenummer: 94108063.2
(22) Anmeldetag: 26.05.1994
(51) Int. Cl.: H01R 35/02, H02G 11/00, B60R 16/02

(54) **Wickelfeder in einer elektrischen Zuleitung zu einem Lenkrad eines Kraftfahrzeuges**
Coil spring in an electrical cable connected to a steering wheel of a motor vehicle
Ressort d'enroulement dans un câble électrique raccordé à un volant d'un véhicule à moteur

(30) Priorität: 09.07.1993 DE 4322879
(43) Veröffentlichungstag der Anmeldung: 11.01.1995
(73) Patentinhaber: Dr.Ing.h.c. F. Porsche Aktiengesellschaft, 70435 Stuttgart (DE)
(72) Erfinder: Bechtle, Rolf, D-74321 Bietigheim-Bissingen (DE)

(56) Entgegenhaltungen:
- WO-A-91/17592
- DE-U- 8 508 742
- US-A- 4 797 109

## Beschreibung

Die Erfindung betrifft eine Wickelfeder in einer elektrischen Zuleitung zu einem Lenkrad eines Kraftfahrzeuges nach dem Oberbegriff des Patentanspruches 1.

Mit der Einführung von in Lenkrädern von Kraftfahrzeugen angeordneten Airbag-Systemen wird die elektrische Verbindung zwischen dem Lenkrad und einem Aufbau des Kraftfahrzeuges immer häufiger durch Wickelfedern hergestellt, mit denen eine unterbrechungsfreie elektrische Verbindung erreicht werden kann. Eine solche Wickelfeder besteht aus einem als Leiterband ausgebildeten Stromleiter mit in der Regel mehreren Strombahnen, das in konzentrischen Wicklungen in einem Gehäuse um eine Lenkspindel herum angeordnet ist. Das eine Ende des Leiterbandes ist mit einem die Längsspindel umgebenden Kern des Gehäuses verbunden und stellt die lenkradseitige Verbindung dar. Das andere Ende des Leiterbandes ist mit einem unteren Gehäuseteil verbunden und stellt die Verbindung zum Aufbau des Kraftfahrzeuges dar.

Bei der Montage einer Wickelfeder ist es von großer Bedeutung, daß diese sich in einer bestimmten Stellung, nämlich in der Mitte ihres Bewegungsvermögens befindet. Ist dies nicht der Fall, so besteht beim Einschlagen des Lenkrades die Gefahr, daß die Wickelfeder vollständig auf- bzw. abgewickelt wird und reißt oder abknickt. Um die Wickelfeder bis zum Einbau des Lenkrades in der Anlieferstellung zu halten, sind eine Reihe von speziellen Verriegelungsvorrichtungen entwickelt worden. So ist aus dem DE-GM 85 08 742 eine um eine Lenkspindel herum angeordnete Wickelfeder mit einer Verriegelungseinrichtung bekannt geworden, bei der eine Wippe im Ruhezustand im unteren Gehäuseteil eingreift und außer Eingriff zu bringen ist, indem die Wippe von einer Verschraubung des Lenkrades mitgenommen wird, wenn diese beim Anziehen eine achsiale Bewegung ausführt.

Aus der US 4,797,109 A ist eine Verbindungsvorrichtung mit gewickelter Leitung, insbesondere eine Wikkelfeder für Kraftfahrzeuge bekannt, bei der an einem ersten Gehäuseteil angebrachte Steg innenseits in einen Einschnitt des zweiten Gehäuseteiles eingreift. Bei der Montage des Lenkrades wird die Montagebewegung des Lenkrades über einen an dem Steg angeordneten Arm auf den Steg übertragen und der Steg aus dem Einschnitt herausgeschwenkt.

Um Raum für eine Erhöhung der Anzahl der Leiterbahnen zu schaffen ist es nun Aufgabe der Erfindung, die Wickelfeder so auszuführen, daß die Verriegelungsvorrichtung nur noch wenig Platz beansprucht.

Diese Aufgabe wird erfindungsgemäß durch die Merkmale des kennzeichnenden Teiles des Anspruchs 1 gelöst. Die dort beschriebene Wickelfeder zeichnet sich durch eine Verriegelungsvorrichtung aus, die in radialer Richtung zur Lenkspindel wirkt. Damit kann nun der Raumbedarf im Bereich des Kernes des Gehäuses zugunsten des für das Leiterband verfügbaren Raumes verringert werden. Das Leiterband kann nun länger ausgeführt werden und ist damit für eine größere Anzahl von Lenkradumdrehungen nutzbar. Alternativ hierzu kann auch das untere Gehäuseteil verkleinert werden, so daß die Wickelfeder im Ganzen weniger Raum einnimmt. Jeden Falls ist es von besonderem Vorteil, daß der Raumgewinn im Bereich des Kernes erfolgt. Hier benötigt eine (das Bewegungsvermögen der Wickelfeder ausschließlich bestimmende) Wicklung weniger Länge, so daß entweder die Anzahl der Wicklungen mit weniger Leiterbandlänge erhöht werden kann oder bei gleichem Bewegungsvermögen weniger Leiterbandlänge beansprucht wird und damit ein verbesserter Raumgewinn erzielt ist.

In Weiterbildung der Erfindung wird die Verriegelungseinrichtung durch eine an einer Nabe des Lenkrades angeordnete Rampe beim Aufsetzen des Lenkrades in radialer Richtung bewegt und so außer Eingriff gebracht. Neben der Umsetzung der entlang der Lenkspindel verlaufenden Bewegung beim Aufsetzen des Lenkrades in eine Bewegung senkrecht zur Lenkspindel wirkt die Rampe als Mitnehmer für den Kern der Wickelfeder und sorgt für einen winkelgenaue Verbindung von Kern und Lenkrad, so daß bei jeder Montage die Stellung des Kernes bezogen auf das Lenkrad eindeutig vorgegeben ist.

Mit den weiteren vorgeschlagenen Maßnahmen wird der Raumbedarf der Verriegelungsvorrichtung und damit der Wickelfeder weiterhin vermindert, indem die Verriegelungsvorrichtung als Blechstreifen ausgeführt ist und zudem radial von außen in Ausnehmungen am unteren Gehäuseteil eingreift. Eine mit deiner derart ausgebildeten Verriegelungsvorrichtung versehene Wickelfeder baut besonders flach und benötigt am Lenkrad keinen Raum im Bereich des Kernes, sondern außenseits der Wickelfeder eine kleine Ausnehmung am Lenkrad in der Größe des Arbeitsweges der Verriegelungsvorrichtung. Da der Kern in Bezug auf das Lenkrad feststehend ist, muß diese Ausnehmung für den Arbeitsweg auch nicht umlaufend, sondern nur im Bereich der Verriegelungsvorrichtung ausgeführt werden, so daß die Festigkeit des Lenkrades durch diese Ausnehmung nur wenig beeinträchtigt wird.

Durch die Anordnung von mehreren Ausnehmungen am unteren Gehäuseteil kann die Wickelfeder in jeder Drehlage verriegelt werden. Schließlich bildet ein zweiter Vorsprung an der Verriegelungsvorrichtung in Verbindung mit einer am Lenkrad angeordneten Rampe eine besonders einfache und wirksame Entriegelungsvorrichtung.

Die Erfindung ist nachstehend anhand eines in den Figuren dargestellten Ausführungsbeispieles beschrieben.

Es zeigen:
- Fig. 1: eine Ansicht von oben einer Wickelfeder und
- Fig. 2: einen Schnitt durch die Wickelfeder nach der Linie II-II der Fig. 1.

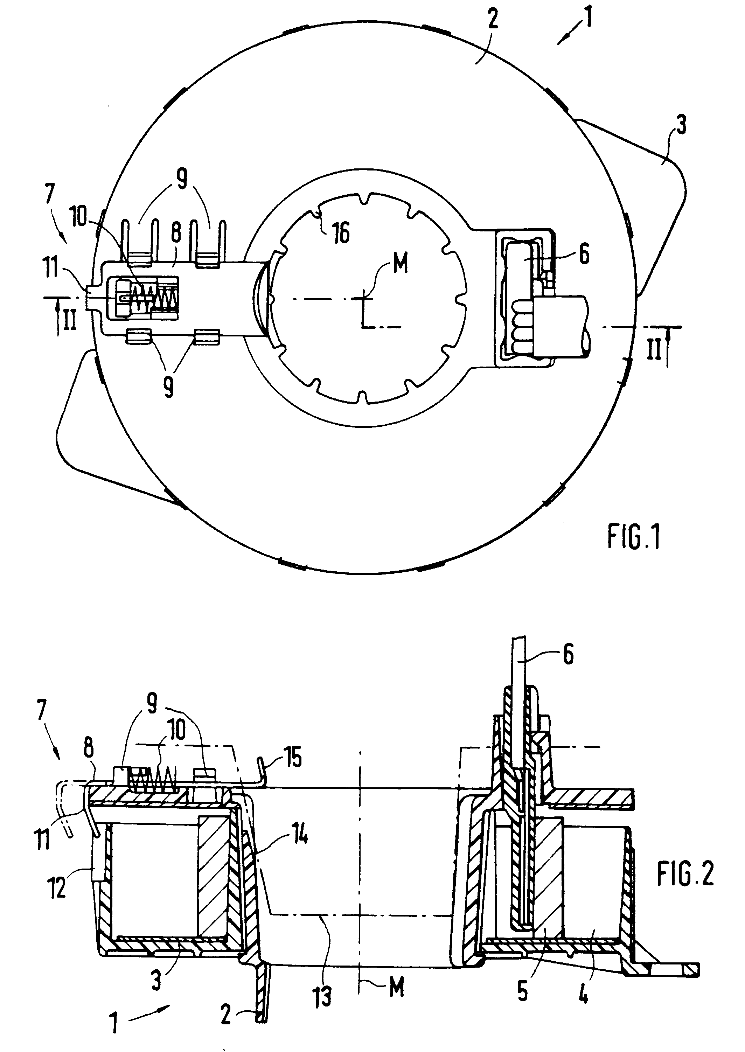

Fig. 1 zeigt eine Wickelfeder 1 in der Ansicht von oben. Wie aus dem zugehörigen Schnitt in Figur 2 zu erkennen ist, besteht das Gehäuse der Wickelfeder 1 aus einem Kern 2 und einem unteren Gehäuseteil 3, die um eine nicht gezeigte Lenkspindel herum angeordnet sind. In einem Ringraum 4 des unteren Gehäuseteiles 3 liegt in konzentrischen Ringen ein Leiterband 5 mit mehreren Leiterbahnen, dessen innenseitig liegendes Ende mit einem elektrischen Anschluß 6 versehen ist. Der elektrische Anschluß 6 ist am Kern 2 gehalten, während ein nicht gezeigter elektrischer Anschluß am anderen, außen liegenden Ende des Leiterbandes 5 am unteren Gehäuseteil 3 gehalten ist.

Eine am Kern 2 angeordnete Verriegelungsvorrichtung 7 besteht aus einem Riegel 8, der zwischen Rastnasen 9, die am Kern 2 ausgebildet sind, gehalten ist. Eine am Riegel 8 angeordnete Feder 10 drückt den Riegel 8 radial nach innen in Richtung einer Mittelachse M. Ein außen am Riegel 8 ausgebildeter erster Vorsprung 11 greift in der Ruhelage des Riegels 8 in eine Ausnehmung 12 am unteren Gehäuseteil 3 ein. Neben der gezeigten Ausnehmung 12 sind über den Umfang gleichmäßig verteilt zwölf weitere, nicht näher dargestellte Ausnehmungen vorgesehen.

Die Nabe 13 eines die Wickelfeder aufnehmenden Lenkrades weist eine Rampe 14 korrespondierend zu einem zweiten Vorsprung 15 des Riegels 8 auf. Am Kern 2 ausgebildete Vorsprünge 16 zentrieren die Nabe 13 in ihrer eingeschobenen Position.

Beim Aufschieben der Nabe 13 auf die Wickelfeder 1 - was, da nur einzige Rampe 14 an der Nabe 13 vorgesehen ist und die Rampe 14 in einen am Kern 2 vorgesehene Aussparung eingreift, nur in einer einzigen bestimmten Position möglich ist - gleitet der zweite Vorsprung 15 an der Rampe 14 entlang und der Riegel 8 bewegt sich gegen die Kraft der Feder 10 aus seiner Ruheposition in die gestrichelt dargestellte Arbeitsposition. Dadurch gerät der erste Vorsprung 11 außer Eingriff mit der Ausnehmung 12 und der Kern 2 kann gegenüber dem unteren Gehäuse 3 verdreht werden. Die Rampe 14 sorgt außerdem in Verbindung mit der Aussparung für eine drehfeste Verbindung von Kern 2 und Nabe 13.

Durch die Vielzahl von Ausnehmungen 12 am Umfang des unteren Gehäuseteiles 3 gerät der erste Vorsprung 11 in jeder Stellung beim Abziehen der Nabe 13 in Eingriff mit einer Ausnehmung 12. Damit ist sichergestellt, daß bei jeder Demontage die Wickelfeder bei der Wiedermontage des Lenkrades nicht verdreht ist.

## Patentansprüche

1. Wickelfeder (1) in einer elektrischen Zuleitung (6) zu einem Lenkrad (13) eines Kraftfahrzeuges, bestehend aus einem elektrischen Leiterband (5), das in konzentrischen Wicklungen in einem Gehäuse (2,3) angeordnet ist und dessen eines Ende in einem am Lenkrad um eine Lenkspindel befestigten Kern (2) und dessen anderes Ende an einem am Fahrzeugaufbau gehaltenen unteren Gehäuseteil (3) endet, mit einer am Gehäuse angeordneten, in radialer Richtung zur Drehachse der Wickelfeder wirkenden Verriegelungsvorrichtung (7) zwischen dem Kern und dem unteren Gehäuseteil, **dadurch gekennzeichnet**, daß die Verriegelungsvorrichtung (7) flach auf einem Flansch des Kernes (2) außerhalb des Kernes (2) angeordnet ist und von außen in radialer Richtung auf die Drehachse hin in das untere Gehäuseteil (3) eingreift.

2. Wickelfeder nach Anspruch 1, **dadurch gekennzeichnet**, daß die Verriegelungsvorrichtung (7) durch das Aufsetzen des Lenkrades (13) durch eine am Lenkrad angeordnete Rampe (14) in radialer Richtung bewegbar und damit entriegelbar ist.

3. Wickelfeder nach Anspruch 1, **dadurch gekennzeichnet**, daß die Verriegelungsvorrichtung (7) aus einem Blechstreifen (8) mit zwei endseits angeordneten Vorsprüngen (11,15) besteht, federbelastet in einer Ruheposition gehalten ist, in der der erste Vorsprung (11) in eine von mehreren außen am unteren Gehäuseteil angeordneten Ausnehmungen (12) eingreift und die Verrriegelungsvorrichtung in eine Arbeitsposition verbringbar ist, indem der zweite innenseitig des Kernes angeordnete Vorsprung (15) von einer am Lenkrad angeordneten Rampe (14) radial nach außen bewegbar ist.

## Claims

1. A coil spring (1) in an electrical supply line (6) to a steering wheel (13) of a motor vehicle, comprising an electrical conductor band (5) which is arranged in concentric coils in a casing (2, 3) and one end of which terminates in a core (2) secured to the steering wheel around a steering spindle and the other end of which terminates on a lower casing part (3) held on the vehicle body, with a locking device (7) - mounted on the casing and acting in a radial direction to the axis of rotation of the coil spring - between the core and the lower casing part, **characterized in that** the locking device (7) is arranged flat on a flange of the core (2) outside the core (2) and engages in the lower casing part (3) from outside in the radial direction to the axis of rotation.

2. A coil spring according to Claim 1, **characterized in that** the locking device (7) is movable and thus lockable in the radial direction by positioning the steering wheel (13) by a ramp (14) arranged on the steering wheel.

3. A coil spring according to Claim 1, **characterized in that** the locking device (7) comprises a sheet-metal strip (8) with two projections (11, 15) arranged at the ends thereof and is held spring-loaded in a rest position in which the first projection (11) engages in one of a plurality of recesses (12) provided on the outside of the lower casing part (3), and the locking device can be moved into an operating position by the second projection (15) mounted on the inside of the core being movable radially outwards by a ramp (14) arranged on the steering wheel.

## Revendications

1. Ressort d'enroulement (1), dans un câble d'amenée électrique (6), raccordé à un volant (13) appartenant à un véhicule automobile, constitué d'un ruban conducteur de l'électricité (5), disposée en des enroulements concentriques dans un boîtier (2, 3) et dont une extrémité s'achève en un noyau (2) fixé au volant autour d'une broche de direction et dont l'autre extrémité s'achève sur une partie de boîtier (3) maintenue sur la carrosserie du véhicule, avec un dispositif de verrouillage (7) disposé sur le boîtier, agissant dans la direction radiale par rapport à l'axe de rotation du ressort d'enroulement, le dispositif de verrouillage (7) étant disposé entre le noyau et la partie de boîtier inférieure, caractérisé en ce que le dispositif de verrouillage (7) est disposé à plat sur une bride (17) du noyau (2) à l'extérieur de ce noyau (2) et s'engage de l'extérieur en direction radiale sur l'axe de rotation, dans la partie de boîtier inférieure (3).

2. Ressort d'enroulement selon la revendication 1, caractérisé en ce que le dispositif de verrouillage (7) est déplaçable en direction radiale et est ainsi susceptible d'être déverrouillé, suite à la mise en place du volant (13), au moyen d'une rampe (14) disposée sur le volant.

3. Ressort d'enroulement selon la revendication 1, caractérisé en ce que le dispositif de verrouillage (7) est constitué d'une bande de tôle (8), comportant deux saillies (11, 15) disposées du côté extrémité, qui sont maintenues, sollicitées par un ressort, dans une position de repos dans laquelle la première saillie (11) s'engage dans l'un d'une pluralité d'évidements (12) ménagés extérieurement sur la partie de boîtier inférieure et le dispositif de verrouillage étant susceptible d'être logé dans une position de travail, dans laquelle la deuxième saillie (15), disposée côté intérieur du noyau, est déplaçable radialement vers l'extérieur par une rampe (13) disposée sur le volant.
